(19) Europäisches Patentamt
European Patent Office
Office européen des brevets

(11) **EP 3 465 041 B1**

(12) **EUROPÄISCHE PATENTSCHRIFT**

(45) Veröffentlichungstag und Bekanntmachung des Hinweises auf die Patenterteilung:
**27.03.2024 Patentblatt 2024/13**

(21) Anmeldenummer: **17725556.9**

(22) Anmeldetag: **17.05.2017**

(51) Internationale Patentklassifikation (IPC):
**F27B 7/20** *(2006.01)* **F27D 17/00** *(2006.01)*

(52) Gemeinsame Patentklassifikation (CPC):
**F27D 17/002; C21B 5/06; F27B 7/20; F27D 17/001;**
C21B 2100/22; C21B 2100/24; C21B 2100/282;
C21C 2100/02; C21C 2100/04; Y02P 10/25

(86) Internationale Anmeldenummer:
**PCT/EP2017/061791**

(87) Internationale Veröffentlichungsnummer:
**WO 2017/202658 (30.11.2017 Gazette 2017/48)**

(54) **ANLAGENVERBUND ZUR HERSTELLUNG MINERALISCHER BAUSTOFFE SOWIE EIN VERFAHREN ZUM BETREIBEN DES ANLAGENVERBUNDES**

GROUP OF INSTALLATIONS FOR MANUFACTURING MINERAL CONSTRUCTION MATERIALS AND A METHOD FOR OPERATING THE GROUP OF INSTALLATIONS

SYSTÈME D'INSTALLATIONS INTERCONNECTÉES DE FABRICATION DE MATÉRIAUX DE CONSTRUCTION MINÉRAUX ET PROCÉDÉ DE FONCTIONNEMENT DU SYSTÈME D'INSTALLATIONS INTERCONNECTÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2016 DE 102016209027**

(43) Veröffentlichungstag der Anmeldung:
**10.04.2019 Patentblatt 2019/15**

(73) Patentinhaber:
• **thyssenkrupp Polysius GmbH**
**59269 Beckum (DE)**
• **thyssenkrupp AG**
**45143 Essen (DE)**

(72) Erfinder:
• **ACHATZ, Reinhold**
**45259 Essen (DE)**
• **LOCHER, Georg**
**59302 Oelde (DE)**
• **KLEINSCHMIDT, Ralph**
**45472 Mülheim a.d.Ruhr (DE)**

(74) Vertreter: **thyssenkrupp Intellectual Property GmbH**
**ThyssenKrupp Allee 1**
**45143 Essen (DE)**

(56) Entgegenhaltungen:
WO-A1-2014/009487 WO-A1-2015/086152
WO-A1-2015/086153 US-A1- 2014 130 717

**Beschreibung**

Stand der Technik

Die vorliegende Erfindung betrifft einen Anlagenverbund zur Herstellung mineralischer Baustoffe sowie ein Verfahren zum Betreiben des Anlagenverbundes.

Anlagen zur Herstellung mineralischer Baustoffe umfassend einen Brennofen zur Erzeugung mineralischer Baustoffe und einem Kühler zur Kühlung der mineralischen Baustoffe sind im Stand der Technik in einer Vielzahl von Ausführungsformen bekannt. Insbesondere kann ein Zementwerk eine solche Anlage oder Bestandteil einer solchen Anlage sein. In Zementwerken werden die meist in Steinbrüchen abgebauten und mit Vorbrechern vorzerkleinerten Rohmaterialien, wie Kalkstein, insbesondere als Quelle für Calciumoxid, Ton, insbesondere als Quelle für Siliciumdioxid und Aluminiumoxid, Sand, beispielsweise als Quelle für Siliciumdioxid und Eisenerz, insbesondere als Quelle für Eisen(III)-oxid beispielsweise in Rohmühlen zusammen vermahlen und gleichzeitig getrocknet. Das dabei entstehende sogenannte Rohmehl wird dann in einem Brennofen, wie beispielsweise einem Drehrohrofen zur Erzeugung mineralischer Baustoffe bei Temperaturen von ca. 1400 - 1450 °C zu dem sogenannten Klinker gebrannt. Der Klinker wird anschließend in einem Kühler auf eine Temperatur von unter 200 °C heruntergekühlt. Bei diesem Herstellungsprozess wird insbesondere der in den Roh- und Brennstoffen enthaltene Kohlenstoff in Kohlenstoffdioxid umgewandelt und freigesetzt. Kohlenstoffdioxid ($CO_2$) ist ein Treibhausgas und trägt, wenn es in die Atmosphäre gelangt als einer der Hauptfaktoren zur Verstärkung des Treibhauseffektes bei. In diesem Zusammenhang werden in einigen Staaten für Treibhausgasemissionen $CO_2$-Abgaben erhoben.

Aus der WO 2014/009 487 A1 ist ein Verfahren zur Behandlung von Biomasse in einer Anlage zur Herstellung von Zement bekannt.

Aus der WO 2015/086 152 A1 ist ein Anlagenverbund zur Stahlerzeugung bekannt.

Aus der WO 2015/086 153 A1 ist ein Anlagenverbund zur Stahlerzeugung bekannt.

Aus V. Phuangphet et. al. "Chemical recycling of carbon dioxide emissions from a cement plant into dimethyl ether, a case study of an integrated process in France using a Reverse Water Gas Shift (RWGS) step", International Journal of Hydrogen Energy, Elsevier Science Publishers, BARKING GB, 11-04-2011, VOL. 38, Nr. 15, 6397-6405, XP 02 859 2883 ist die chemische Umwandlung von $CO_2$ Emissionen aus einem Zementwerk in Dimethylether bekannt.

Der vorliegenden Erfindung liegt daher die Aufgabe zugrunde, die Nachhaltigkeit, insbesondere die ökonomischen und ökologischen Bedingungen des Gesamtprozesses weiter zu verbessern und insbesondere einen Anlagenverbund zur Herstellung mineralischer Baustoffe anzugeben, mit dem es möglich ist, die mit der Herstellung und Verwendung mineralischer Baustoffe verbundene Freisetzung von $CO_2$ in die Atmosphäre und/oder Kosten zur Herstellung und/oder Verwendung mineralischer Baustoffe zu reduzieren. Außerdem wird angestrebt, die $CO_2$-Emissionen bei der Herstellung mineralischer Baustoffe zu reduzieren. Zudem soll die Wirtschaftlichkeit des Gesamtprozesses weiter verbessert werden.

Offenbarung der Erfindung

Diese Aufgabe wird mit einem Anlagenverbund nach Anspruch 1 und einem Verfahren zum Betreiben eines Anlagenverbundes zur Herstellung mineralischer Baustoffe nach Anspruch 12 gelöst.

Der erfindungsgemäße Anlagenverbund weist gegenüber konventionellen Anlagen den Vorteil auf, dass Einzelanlagen in einem Anlagenverbund zusammengeschlossen sind und stoffliche Ströme, insbesondere Gasmengenströme, thermischer Energie und energetische Ströme im Verbund geführt werden können. Zudem ist die weitere Nutzung bzw. Verarbeitung von Kohlenstoffdioxid möglich, bevor eine Abgabe in die Atmosphäre erfolgt. Auf diese Weise werden die Umweltauswirkungen verringert und/oder die Wirtschaftlichkeit der Herstellung von mineralischen Baustoffen erhöht und/oder ein Gesamtoptimum hinsichtlich einer ökonomischen und/oder ökologischen Herstellung und/oder Verwendung mineralischer Baustoffe für einen Anlagenverbund erzielt.

Gegenstand der Erfindung ist ein Anlagenverbund zur Herstellung mineralischer Baustoffe mit einem Brennofen zur Erzeugung mineralischer Baustoffe,

einem Kühler zur Kühlung der mineralischen Baustoffe, und
einem Gasleitungssystem für Gase, die bei der Herstellung der mineralischen Baustoffe anfallen, wobei der Anlagenverbund eine an das Gasleitungssystem angeschlossene Chemieanlage und/oder Biotechnologieanlage aufweist und das Gasleitungssystem mindestens eine steuerbare Gasweiche zur Aufteilung der der Chemieanlage und/oder Biotechnologieanlage zugeführten Gasmengenströme und eine Anlage zur Wasserstofferzeugung und ein $H_2$-Gasleitungssystem für aus der Anlage zur Wasserstofferzeugung emittierte wasserstoffhaltige Gasmengenströme umfasst, wobei das Gasleitungssystem in Strömungsrichtung vor und/oder nach der steuerbaren Gasweiche verbunden ist mit dem $H_2$-Gasleitungssystem über eine Mischvorrichtung zur Herstellung eines Mischgases umfassend anfallende Gase, aus der Herstellung der mineralischen Baustoffe und aus der Anlage zur Wasserstofferzeugung, aufweist.

Ein weiterer Gegenstand der Erfindung betrifft ein Verfahren zum Betreiben eines Anlagenverbundes zur Herstellung mineralischer Baustoffe, der einen Brennofen zur Erzeugung mineralischer Baustoffe, einen Kühler für die Kühlung der mineralischen Baustoffe, ein Gasleitungssystem für Gase, die bei der Herstellung der mineralischen Baustoffe anfallen, eine an das Gasleitungssystem angeschlossene Chemieanlage und/oder Biotechnologieanlage, mindestens eine mit dem Gasleitungssystem verbundene steuerbare Gasweiche zur Aufteilung der der Chemieanlage und/oder Biotechnologieanlage zugeführten Gasmengenströme und eine Anlage zur Wasserstofferzeugung und ein $H_2$-Gasleitungssystem für aus der Wasserstofferzeugung emittierte wasserstoffhaltige Gasmengenströme aufweist, wobei

a) zumindest eine Teilmenge des bei der Herstellung der mineralischen Baustoffe anfallenden Gases mit
b) zumindest einer Teilmenge des aus der Elektrolyseanlage zur Wasserelektrolyse anfallenden wasserstoffhaltigen Gases
c) gemischt wird und
d) wobei das Mischgas als Nutzgas zum Betrieb der Chemieanlage und/oder Biotechnologieanlage verwendet wird.

Unter mineralischen Baustoffen werden im Rahmen der Erfindung Baustoffe verstanden, welche eine Zusammensetzung von Mineralien umfassen. Beispiele hierfür sind calciumhaltige Baustoffe, wie Zement, Kalk, Gips und calcinierte Tone, sowie bereits behandelte Rückstände aus Produktionsverfahren, insbesondere aus der Metallherstellung, insbesondere der Eisen- und Stahlherstellung, wie beispielsweise Schlacke(n) und Kombinationen hiervon.

In der Chemieanlage können chemische Produkte aus den zugeführten Gasmengenströmen und/oder den Nutzgasen und/oder den Synthesegasen erzeugt werden, welche jeweils die Komponenten des Endproduktes enthalten. Bei den nach dem erfindungsgemäßen Verfahren hergestellten Synthesegas handelt es sich um Gasmischungen, die zur Synthese eingesetzt werden. Unter den Begriff "Synthesegas" fallen z. B. Gemische aus $N_2$ und $H_2$ für die Ammoniaksynthese und vor allem Gasgemische, die hauptsächlich CO und $H_2$ oder $CO_2$ und $H_2$ oder CO, $CO_2$ und $H_2$ enthalten. Aus den Synthesegasen können in einer Chemieanlage chemische Produkte erzeugt werden, welche jeweils die Komponenten des Eduktes enthalten. Chemische Produkte können beispielsweise Ammoniak oder Methanol oder auch andere Kohlenwasserstoffverbindungen sein.

Zur Herstellung von Ammoniak muss ein Synthesegas bereitgestellt werden, welches Stickstoff und Wasserstoff im richtigen Verhältnis enthält. Als Stickstoffquelle kann beispielsweise zusätzlich eine Luftzerlegungsanlage zur wenigstens teilweisen Zerlegung von Umgebungsluft in ein wenigstens teilweise sauerstoffhaltiges Gas und ein wenigstens teilweise stickstoffhaltiges Gas, bereitgestellt werden. Als Wasserstoffquelle wird eine zusätzliche Anlage zur Wasserstofferzeugung, wie beispielsweise eine Wasserelektrolyseanlage bereitgestellt. Zur Herstellung von Kohlenwasserstoffverbindungen, beispielsweise Methanol, muss ein im Wesentlichen aus CO und/oder $CO_2$ und -$H_2$ bestehendes Synthesegas bereitgestellt werden, welches die Komponenten Kohlenmonoxid und/oder Kohlenstoffdioxid und Wasserstoff im richtigen Verhältnis enthält. Das Verhältnis wird häufig durch das Modul ($H_2$ - $CO_2$) / (CO + $CO_2$) beschrieben. Der Wasserstoff wird durch eine zusätzliche Anlage zur Wasserstofferzeugung bereitgestellt. Die Bereitstellung von CO kann mit einem zusätzlichen Reverse-Watergas-Shift-Reactor (RWGS-Reaktor) erfolgen. Als $CO_2$-Quelle kann das beim Herstellungsprozess freigesetzte Kohlenstoffdioxid dienen.

Bei den vorstehend beschriebenen Konzepten kann allerdings der C-Gehalt der Gase die bei der Herstellung der mineralischen Baustoffe anfallen, nicht vollständig genutzt werden, da ein Wasserstoff-Unterschuss vorliegt. Um den C-Gehalt der bei der Herstellung der mineralischen Baustoffe anfallenden Gase vollständig für die Herstellung von chemischen Produkten nutzen zu können, wird erfindungsgemäß Wasserstoff zu dosiert, der in einer Anlage zur Wasserstofferzeugung gebildet wird. Die Wasserstofferzeugung erfolgt vorzugsweise durch Wasserelektrolyse, wobei die Wasserelektrolyse zweckmäßig mit elektrischem Strom betrieben wird, der aus erneuerbarer Energie erzeugt wurde. Bei der Wasserelektrolyse entsteht auch Sauerstoff, der in dem Brennofen zur Erzeugung der mineralischen Baustoffe genutzt werden kann. Das Zuführen von Sauerstoff ist auch als Oxyfuel-Verfahren bekannt, bei welchem besonders hohe Flammentemperaturen erreicht werden können. Insbesondere ist das Oxyfuel-Verfahren sowohl für gasförmige als auch für flüssige und feste Brennstoffe anwendbar.

Zusätzlich oder anstelle einer Chemieanlage zur Erzeugung von Produkten aus den zugeführten Gasmengenströmen und/oder den Nutzgasen und/oder den Synthesegasen kann im Rahmen der Erfindung auch eine biotechnologische Anlage eingesetzt werden. Hierbei handelt es sich um eine Anlage zur Fermentation der vorgenannten Gase. Die zugeführten Gasmengenströmen und/oder Nutzgase und/oder Synthesegase werden über eine Fermentation biochemisch genutzt, wobei Produkte wie Alkohole (Ethanol, Butanol), Aceton oder organische Säuren hergestellt werden können. Auch diese Produkte, die durch Fermentation von Synthesegas erzeugt werden, sind im vorliegenden Fall nur beispielhaft genannt.

Der Wasserstoff kommt bei Anwendung eines biochemischen Prozesses allerdings im Wesentlichen aus dem Wasser, das bei der Fermentation als Medium eingesetzt wird. Die Bereitstellung von CO kann mit einem zusätzlichen Reverse-Watergas-Shift-Reactor (RWGS-Reaktor) erfolgen. Mittels eines biotechnologischen Prozesses können folglich Produkte hergestellt werden, die Kohlenstoff aus dem CO- und/oder $CO_2$-An-

teil der bei der Herstellung mineralischer Baustoffe anfallenden Rohgase und Wasserstoff aus dem bei einem Fermentationsprozess verwendeten Wasser enthalten.

Die Leistung der Chemieanlage oder der biotechnologischen Anlage wird in Abhängigkeit der dieser Anlage zugeführten Gasmengenströme, insbesondere den Nutzgasen und/oder den Synthesegasen geregelt. Eine wesentliche Herausforderung für die Chemieanlage ist die dynamische Fahrweise bei wechselnden Anlagenlasten. Die Betriebsweise bei wechselnden Anlagenlasten kann insbesondere dadurch realisiert werden, dass die Chemieanlage eine Mehrzahl parallel geschalteter kleiner Einheiten aufweist, die je nach zur Verfügung stehenden Nutzgasmengenstrom einzeln zu- oder abgeschaltet werden.

Die dynamische Regelung einer Chemieanlage bei Lastwechseln ist technisch aufwendig. Erfindungsgemäß wird bei einem Lastwechsel zunächst nur die Leistung der Biotechnologieanlage angepasst. Die erfindungsgemäße Lehre nutzt dabei aus, dass eine Biotechnologieanlage im Vergleich zu einer Chemieanlage hinsichtlich Lastwechsel wesentlich flexibler ist.

Nach einer weiteren Ausführungsform der Erfindung umfasst der Anlagenverbund eine Produktionsanlage mit einer Kohlenstoffdioxidquelle und ein $CO_2$-Gasleitungssystem für zumindest einen aus der Produktionsanlage mit einer Kohlenstoffdioxidquelle anfallenden Kohlenstoffdioxidhaltigen Gasmengenstrom, wobei das $CO_2$-Gasleitungssystem mit dem Gasleitungssystem verbunden ist. Eine Produktionsanlage mit einer Kohlenstoffdioxidquelle ist beispielsweise ein Kraftwerk, eine Bioethanol-Anlage, ein Hüttenwerk und/oder weitere Anlagen zur Herstellung mineralischer Baustoffe oder eine Kombination hiervon.

Im Rahmen der vorliegenden Erfindung wird unter einer steuerbaren Gasweiche eine Einrichtung verstanden, mit welcher die Zufuhrmenge an Gasen zu den im Verbund angeordneten Anlagen steuerbar ist. Beispielsweise kann nach bestimmten Anforderungen, insbesondere zur Verfügung stehende Gasmengen, Gaszusammensetzungen, Energie und Strom die Beaufschlagung einer und/oder mehrerer Anlagen im Anlagenverbund nach Bedarf erfolgen.

Der Anlagenverbund kann optional im Verbund zusätzlich eine Sauerstoffzufuhreinrichtung aufweisen, welche mit dem Brennofen zur Erzeugung mineralischer Baustoffe verbunden ist. Beispielsweise kann die Sauerstoffzufuhr Einrichtung der Austritt einer Rohrleitung, eine Düse oder eine Kombination hiervon sein. Mit dem Zuführen von Sauerstoff über die Sauerstoffzufuhreinrichtung in den Brennofen können besonders hohe Flammentemperaturen erreicht werden. Dieses, beispielsweise auch als Oxyfuel-Verfahren bekannte Verfahren, ist sowohl für gasförmige als auch für flüssige und feste Brennstoffe anwendbar. Insbesondere kann Sauerstoff für die Sauerstoffzufuhreinrichtung bereitgestellt werden aus einer Elektrolyseanlage zur Wasserelektrolyse und/oder Luftzerlegungsanlage.

Gemäß einer weiteren Ausführungsform der Erfindung weist der Anlagenverbund zusätzlich eine Anlage zur $CO_2$-Abtrennung von aus den aus der Produktionsanlage mit einer Kohlenstoffdioxidquelle anfallenden kohlenstoffdioxidhaltigen Gas und/oder bei der Herstellung der mineralischen Baustoffe anfallenden Gas auf.

Nach einer weiteren Ausführungsform der Erfindung umfasst die Anlage zur $CO_2$-Abtrennung zur Abtrennung von $CO_2$ aus dem zumindest einen aus der Produktionsanlage mit einer Kohlenstoffdioxidquelle anfallenden kohlenstoffdioxidhaltigen Gasmengenstrom eine Absorbereinrichtung und eine der Absorbereinrichtung nachgeschaltete Desorbereinrichtung.

Nach einer weiteren Ausführungsform der Erfindung weist der Anlagenverbund zusätzlich eine Anlage zur $CO_2$-Reinigung und/oder $CO_2$-Konditionierung auf, wobei die Anlage zur $CO_2$-Reinigung und/oder $CO_2$-Konditionierung mit der Produktionsanlage mit einer Kohlenstoffdioxidquelle und/oder der Anlage zur $CO_2$-Abtrennung verbunden ist. Im Rahmen der vorliegenden Erfindung wird unter Gasreinigung, insbesondere $CO_2$-Reinigung und Gaskonditionierung, insbesondere $CO_2$-Konditionierung die Aufbereitung der Gase für die verfahrenstechnisch nachgeschalteten Anlagen des Anlagenverbundes verstanden. Beispielsweise kann die Anlage zur $CO_2$-Reinigung eine $CO_2$-Waschanlage zur Abtrennung von $CO_2$ umfassen.

Gemäß einer weiteren Ausführungsform der Erfindung umfasst der Anlagenverbund zusätzlich eine Vergasungseinrichtung zur Aufkonzentration des $CO_2$-Anteils, wobei die Vergasungseinrichtung der $CO_2$-Waschanlage zur Abtrennung von $CO_2$ aus dem zumindest einen aus der Produktionsanlage mit einer Kohlenstoffdioxidquelle anfallenden Kohlenstoffdioxidhaltigen Gasmengenstrom vorgeschaltet angeordnet ist.

In einer weiteren Ausführungsform der Erfindung umfasst der Anlagenverbund zusätzlich eine $SO_2$-Abtrennvorrichtung zur Abtrennung von $SO_2$ aus dem zumindest einen aus der Produktionsanlage mit einer Kohlenstoffdioxidquelle anfallenden Kohlenstoffdioxidhaltigen Gasmengenstrom, insbesondere weist die $SO_2$-Abtrennvorrichtung eine Kühleinrichtung auf.

Nach einer weiteren Ausführungsform der Erfindung umfasst der Anlagenverbund zusätzlich eine Wasserdampf-Abscheideeinrichtung.

Gemäß einer weiteren Ausführungsform der Erfindung umfasst der Anlagenverbund zusätzlich eine $CO_2$-Abscheideeinrichtung, insbesondere einen Membranfilter.

In einer weiteren Ausführungsform der Erfindung umfasst der Anlagenverbund zusätzlich einen $CO_2$-Verdichter zur Kompression von aus den aus Produktionsanlage mit einer Kohlenstoffdioxidquelle anfallenden Kohlenstoffdioxidhaltigen Gas und/oder bei der Herstellung der mineralischen Baustoffe anfallenden Gas.

In einer weiteren, bevorzugten Ausführungsform der Erfindung umfasst der Anlagenverbund zusätzlich eine Anlage zur Wasserstofferzeugung und ein $H_2$-Gasleitungssystem für aus der Anlage zur Wasserstofferzeugung anfallende wasserstoffhaltige Gasmengenströme.

Beispielsweise ist die Anlage zur Wasserstofferzeugung eine Elektrolyseanlage zur Wasserelektrolyse. Die Elektrolyseanlage zur Wasserelektrolyse ist mittels einer Sauerstoffrückführleitung mit der Sauerstoffzufuhreinrichtung verbunden. Der bei der Wasserelektrolyse entstehende Sauerstoff kann beispielsweise über die Sauerstoffrückführleitung und die Sauerstoffzufuhreinrichtung dem Brennofen zur Erzeugung mineralischer Baustoffe zugeführt werden. Vorzugsweise ist die Wasserelektrolyseanlage mit einem Energiespeicher elektrisch verbunden und es wird zumindest ein Teil der für die Wasserelektrolyse notwendigen elektrischen Energie dem Energiespeicher entnommen. Zusätzlich kann externer Strom eingesetzt werden, der vorzugsweise aus regenerativen Quellen stammt.

Gemäß einer weiteren bevorzugten Ausführungsform der Erfindung ist das Gasleitungssystem in Strömungsrichtung nach der steuerbaren Gasweiche verbunden mit dem $H_2$-Gasleitungssystem über eine Mischvorrichtung zur Herstellung eines aus Gasen, die aus den aus der Produktionsanlage mit einer Kohlenstoffdioxidquelle anfallen und/oder bei der Herstellung der mineralischen Baustoffe anfallen und anfallenden wasserstoffhaltigen Gasen aus der Anlage zur Wasserstofferzeugung bestehenden Mischgasen und sind die der Chemieanlage und/oder Biotechnologieanlage zugeführten Gasmengenströme mittels der steuerbaren Gasweiche steuerbar.

Nach einer weiteren bevorzugten Ausführungsform der Erfindung weist das $H_2$-Gasleitungssystem eine steuerbare $H_2$-Gasweiche auf und sind die der Chemieanlage und/oder Biotechnologieanlage zugeführten wasserstoffhaltigen Gasmengenströme mittels der steuerbaren $H_2$-Gasweiche steuerbar.

Im Rahmen der vorliegenden Erfindung wird unter einer steuerbaren $H_2$-Gasweiche eine Einrichtung verstanden, mit welcher die Zufuhrmenge an $H_2$-Gasen zu den im Verbund angeordneten Anlagen steuerbar ist. Beispielsweise kann nach bestimmten Anforderungen die Beaufschlagung einer und oder mehrerer Anlagen im Anlagenverbund mit $H_2$ nach Bedarf erfolgen.

Ferner kann der Anlagenverbund zusätzlich einen $H_2$-Speicher zum Speichern zumindest einer Teilmenge emittierter wasserstoffhaltiger Gase aus der Anlage zur Wasserstofferzeugung aufweisen, wobei der $H_2$-Speicher mit dem $H_2$-Gasleitungssystem verbunden ist.

Gemäß einer weiteren Ausführungsform der Erfindung weist der Anlagenverbund zusätzlich einen Energiespeicher, insbesondere einen elektrochemischen Speicher zur Deckung zumindest eines Teils des Strombedarfs des Anlagenverbundes auf.

Nach einer weiteren Ausführungsform der Erfindung weist der Anlagenverbund zusätzlich eine Luftzerlegungsanlage zur wenigstens teilweisen Zerlegung von Umgebungsluft in ein wenigstens teilweise sauerstoffhaltiges Gas und ein wenigstens teilweise stickstoffhaltiges Gas mit einer sauerstoffhaltigen Gas führenden Leitung und einer stickstoffhaltigen Gas führenden Leitung auf. Ferner ist die sauerstoffhaltiges Gas führende Leitung mittels einer Sauerstoffrückführleitung mit der Sauerstoffzufuhreinrichtung verbunden. Sauerstoffhaltiges Gas in der sauerstoffhaltigen Gas führenden Leitung kann beispielsweise über die Sauerstoffrückführleitung und die Sauerstoffzufuhreinrichtung dem Brennofen zur Erzeugung mineralischer Baustoffe zugeführt werden. Stickstoffhaltiges Gas der stickstoffhaltigen Gas führenden Leitung kann insbesondere als Stickstoffquelle einer nachgeordneten Anlage des Anlagenverbundes, wie beispielsweise der Chemieanlage und/oder der Biotechnologieanlage zugeführt werden.

Nach einer weiteren Ausführungsform der Erfindung ist die stickstoffhaltiges Gas führende Leitung mittels einer Mischvorrichtung mit dem $H_2$-Gasleitungssystem verbunden, insbesondere zur Herstellung von Ammoniak.

In einer weiteren bevorzugten Ausführungsform der Erfindung umfasst der Anlagenverbund zusätzlich eine Reverse-Wassergas-Shift-Anlage und ein CO-Gasleitungssystem für aus der Reverse-Wassergas-Shift-Anlage anfallende kohlenstoffmonoxidhaltigen Gasmengenströme, wobei die Reverse-Wassergas-Shift-Anlage in Strömungsrichtung nach der steuerbaren Gasweiche verbunden ist mit dem Gasleitungssystem und dem $H_2$-Gasleitungssystem und dass die der Chemieanlage und/oder Biotechnologieanlage zugeführten Gasmengenströme mittels der steuerbaren Gasweiche steuerbar sind. Im Rahmen der vorliegenden Erfindung wird unter einer Reverse-Wassergas-Shift-Anlage eine Anlage verstanden welche aus kohlenstoffdioxidhaltigen Gasmengenströmen, insbesondere Gasen die bei der Herstellung der mineralischen Baustoffe anfallen, aus dem Kohlenstoffdioxidanteil durch eine Reverse-Wassergas-Shift-Reaktion ($CO_2 + H_2 \rightleftharpoons CO + H_2O$) zumindest teilweise in Kohlenmonoxid umwandeln. Beispielsweise kann der für die Reaktion erforderlicher Wasserstoff aus einer Anlage zur Wasserstofferzeugung bereitgestellt werden.

Gemäß einer weiteren bevorzugten Ausführungsform der Erfindung weist das CO-Gasleitungssystem eine steuerbare CO-Gasweiche auf und die der Chemieanlage und/oder Biotechnologieanlage zugeführten kohlenstoffmonoxidhaltigen Gasmengenströme sind mittels der steuerbaren CO-Gasweiche steuerbar.

Im Rahmen der vorliegenden Erfindung wird unter einer steuerbaren CO-Gasweiche eine Einrichtung verstanden, mit welcher die Zufuhrmenge an CO-Gasen zu den im Verbund angeordneten Anlagen steuerbar ist. Beispielsweise kann nach bestimmten Anforderungen die Beaufschlagung einer und oder mehrerer Anlagen im Anlagenverbund mit CO nach Bedarf erfolgen.

In einer weiteren Ausführungsform der Erfindung weist der Anlagenverbund zusätzlich einen Biomassespeicher zur Speicherung von Biomasse, insbesondere aus der Biotechnologieanlage auf, wobei zumindest eine Teilmenge der Biomasse aus dem Biomassespeicher und/oder der Biotechnologieanlage der Sekundärbrennstoffzufuhreinrichtung des Anlagenverbunds zugeführt wird.

In einer weiteren Ausführungsform der Erfindung weist der Anlagenverbund zusätzlich einen stofflichen Speicher auf. Beispiele für einen stofflichen Speicher sind ein Methanolspeicher, ein SNG-Speicher (Synthetic Natural Gas bzw. Substitute Natural Gas), FT-Kraftstoff-Speicher (Fischer-Tropsch-Synthese-Kraftstoffe), Ethanolspeicher.

Nach einer weiteren Ausführungsform des erfindungsgemäßen Verfahrens wird dem Anlagenverbund, insbesondere dem Brennofen zur Erzeugung mineralischer Baustoffe zusätzlich ein Sauerstoffstrom mit einer Sauerstoffzufuhreinrichtung zugeführt.

In einer weiteren Ausführungsform des erfindungsgemäßen Verfahrens zum Betreiben eines Anlagenverbundes zur Herstellung der mineralischen Baustoffe, weist der Anlagenverbund einen Brennofen zur Erzeugung mineralischer Baustoffe, einen Kühler zur Kühlung der mineralischer Baustoffe, ein Gasleitungssystem für Gase, die bei der Herstellung der mineralischen Baustoffe anfallen, eine an das Gasleitungssystem angeschlossene Biotechnologieanlage und eine Sekundärbrennstoffzufuhreinrichtung zum wenigstens teilweisen Betrieb des Anlagenverbundes, insbesondere des Brennofens zur Erzeugung mineralischer Baustoffe mit Sekundärbrennstoffen auf, wobei zumindest eine Teilmenge des bei der Herstellung der mineralischen Baustoffe anfallenden Gases als Nutzgas zum Betrieb der Biotechnologieanlage verwendet wird.

Gemäß dem erfindungsgemäßen Verfahren wird zumindest eine Teilmenge des bei der Herstellung der mineralischen Baustoffe anfallenden Gases mit zumindest einer Teilmenge anfallender wasserstoffhaltiger Gase aus der Anlage zur Wasserstofferzeugung gemischt und wird das Mischgas als Nutzgas zum Betrieb der Chemieanlage und/oder Biotechnologieanlage verwendet.

In einer weiteren Ausführungsform des erfindungsgemäßen Verfahrens wird zumindest ein Teil des Nutzgases nach einer Gaskonditionierung und/oder Gasreinigung als Synthesegas zur Herstellung chemischer Produkte verwendet und/oder der Biotechnologieanlage zugeführt und wird für biochemische Prozesse genutzt.

Nach einer weiteren Ausführungsform des erfindungsgemäßen Verfahrens wird aus zumindest einer Teilmenge des bei der Herstellung der mineralischen Baustoffe anfallenden Gases nach einer Gaskonditionierung und/oder Gasreinigung ein Synthesegas hergestellt.

Gemäß einer weiteren Ausführungsform des erfindungsgemäßen Verfahrens wird zumindest ein Teil des nach einer Gaskonditionierung und/oder Gasreinigung hergestellten Synthesegases zur Herstellung chemischer Produkte verwendet oder der Biotechnologieanlage zugeführt und für biochemische Prozesse genutzt.

In einer weiteren Ausführungsform des erfindungsgemäßen Verfahrens wird die Leistung der Chemieanlage und/oder der Biotechnologieanlage in Abhängigkeit der dieser/n Anlage(n) zugeführten Nutzgasmenge geregelt.

Nach einer weiteren Ausführungsform des erfindungsgemäßen Verfahrens zum Betreiben eines Anlagenverbundes zur Herstellung mineralischer Baustoffe, der einen Brennofen zur Erzeugung der mineralischen Baustoffe, einen Kühler zur Kühlung der mineralischen Baustoffe, ein Gasleitungssystem für Gase, die bei der Herstellung der mineralischen Baustoffe anfallen, eine an das Gasleitungssystem angeschlossene Chemieanlage und/oder Biotechnologieanlage, mindestens eine mit dem Gasleitungssystem verbundene steuerbare Gasweiche zur Aufteilung der der Chemieanlage und/oder Biotechnologieanlage zugeführten Gasmengenströme und als eine Anlage zur Wasserstofferzeugung eine Elektrolyseanlage zur Wasserelektrolyse und ein $H_2$-Gasleitungssystem für aus der Elektrolyseanlage zur Wasserelektrolyse emittierte wasserstoffhaltige Gasmengenströme aufweist, wird

a) zumindest eine Teilmenge des bei der Herstellung der mineralischen Baustoffe anfallenden Gases mit

b) zumindest einer Teilmenge des aus der Elektrolyseanlage zur Wasserelektrolyse anfallenden wasserstoffhaltigen Gases

c) gemischt und

d) wobei das Mischgas als Nutzgas zum Betrieb der Chemieanlage und/oder Biotechnologieanlage verwendet wird und

e) wobei zumindest eine Teilmenge des aus der Elektrolyseanlage zur Wasserelektrolyse anfallenden sauerstoffhaltigen Gases in dem Anlagenverbund zur Herstellung der mineralischen Baustoffe genutzt wird, insbesondere in den Brennofen zur Erzeugung mineralischer Baustoffe rückgeführt wird.

Nach einer weiteren Ausführungsform des erfindungsgemäßen Verfahrens zum Betreiben eines Anlagenverbundes zur Herstellung mineralischer Baustoffe, der Anlagenverbund zusätzlich umfassend eine Luftzerlegungsanlage zur wenigstens teilweisen Zerlegung von Umgebungsluft in ein wenigstens teilweise sauerstoffhaltiges Gas und ein wenigstens teilweise stickstoffhaltiges Gas mit einer sauerstoffhaltigen Gas führenden Leitung und einer stickstoffhaltigen Gas führenden Leitung aufweist, wird zumindest eine Teilmenge des aus der Luftzerlegungsanlage wenigstens teilweise sauerstoffhaltigen Gases in dem Anlagenverbund zur Herstellung der mineralischen Baustoffe genutzt, insbesondere wird in den Brennofen zur Erzeugung mineralischer Baustoffe rückgeführt und/oder wird zumindest eine Teilmenge des aus der Luftzerlegungsanlage wenigstens teilweise stickstoffhaltigen Gases mit zumindest eine Teilmenge des aus der Elektrolyseanlage zur Wasserelektrolyse emittierte wasserstoffhaltigen Gases gemischt, insbesondere zur Herstellung von Ammoniak.

Nach einer weiteren Ausführungsform des erfindungsgemäßen Verfahrens zum Betreiben eines Anlagenverbundes zur Herstellung mineralischer Baustoffe, der einen Brennofen zur Erzeugung mineralischer Baustoffe, einen Kühler zur Kühlung der mineralischen Baustoffe, ein Gasleitungssystem für Gase, die bei der Herstellung der mineralischen Baustoffe anfallen, eine an das Gasleitungssystem angeschlossene Chemieanlage und/oder Biotechnologieanlage, mindestens eine mit dem Gasleitungssystem verbundene steuerbare Gasweiche zur Aufteilung der der Chemieanlage und/oder Biotechnologieanlage zugeführten Gasmengenströme und eine Anlage zur Wasserstofferzeugung und ein $H_2$-Gasleitungssystem für aus der Anlage zur Wasserstofferzeugung emittierte wasserstoffhaltige Gasmengenströme umfasst, wobei das Gasleitungssystem in Strömungsrichtung nach der steuerbaren Gasweiche verbunden ist mit dem $H_2$-Gasleitungssystem über eine $H_2$-Mischvorrichtung zur Herstellung eines Mischgases umfassend Gase, die bei der Herstellung der mineralischen Baustoffe anfallen und anfallenden wasserstoffhaltigen Gasen aus der Anlage zur Wasserstofferzeugung und eine Reverse-Wassergas-Shift-Anlage und ein CO-Gasleitungssystem für aus der Reverse-Wassergas-Shift-Anlage emittierte kohlenstoffmonoxidhaltige Gasmengenströme umfasst, wobei die Reverse-Wassergas-Shift-Anlage in Strömungsrichtung nach der steuerbaren Gasweiche verbunden ist mit dem Gasleitungssystem und/oder dem $H_2$-Gasleitungssystem und dass die der Chemieanlage und/oder Biotechnologieanlage zugeführten Gasmengenströme mittels der steuerbaren Gasweiche steuerbar sind, wobei zumindest eine Teilmenge

a) des bei der Herstellung der mineralischen Baustoffe anfallenden Gases und/oder

b) des aus der Reverse-Wassergas-Shift-Anlage anfallenden kohlenstoffmonoxidhaltigen Gases und/oder

c) des aus der Elektrolyseanlage zur Wasserelektrolyse anfallenden wasserstoffhaltigen Gases

d) gemischt wird und
wobei das Mischgas als Mischnutzgas zum Betrieb der Chemieanlage und/oder Biotechnologieanlage verwendet wird.

Nach einer weiteren Ausführungsform des erfindungsgemäßen Verfahrens zum Betreiben eines Anlagenverbundes zur Herstellung mineralischer Baustoffe wird

a) zumindest eine Teilmenge des bei der Herstellung der mineralischen Baustoffe anfallenden Gases mit

b) zumindest einer Teilmenge des aus der Elektrolyseanlage zur Wasserelektrolyse anfallenden wasserstoffhaltigen Gases

c) gemischt und

d) wobei das Mischgas als $CO_2$-$H_2$-Nutzgas und/oder CO-$H_2$-Nutzgas und/oder $CO_2$-CO-$H_2$-Nutzgas zum Betrieb der Chemieanlage und/oder Biotechnologieanlage verwendet wird und/oder

e) wobei zumindest eine Teilmenge des aus der Reverse-Wassergas-Shift-Anlage anfallenden kohlenstoffmonoxidhaltigen Gases als CO-Nutzgas zum Betrieb der Chemieanlage und/oder Biotechnologieanlage verwendet wird.

Nach einer weiteren Ausführungsform des erfindungsgemäßen Verfahrens zum Betreiben eines Anlagenverbundes zur Herstellung mineralischer Baustoffe wird der Wasserstoffgehalt des $CO_2$-$H_2$-Nutzgasstromes und/oder CO-$H_2$-Nutzgasstromes und/oder $CO_2$-CO-$H_2$-Nutzgasstromes auf ein Verhältnis im Bereich von 5 Vol-% bis 95 Vol-% bezogen auf das Gesamtvolumen des zugehörigen Nutzgasstroms eingestellt wird.

Nach einer weiteren Ausführungsform des erfindungsgemäßen Verfahrens zum Betreiben eines Anlagenverbundes zur Herstellung mineralischer Baustoffe wird

a) zumindest eine Teilmenge des aus der Reverse-Wassergas-Shift-Anlage anfallenden kohlenstoffmonoxidhaltigen Gases mit

b) zumindest einer Teilmenge des aus der Elektrolyseanlage zur Wasserelektrolyse anfallenden wasserstoffhaltigen Gases

c) gemischt und

d) wobei das Mischgas als CO-$H_2$-Nutzgas und/oder CO-$H_2$-Nutzgas und/oder $CO_2$-CO-$H_2$-Nutzgas zum Betrieb der Chemieanlage und/oder Biotechnologieanlage verwendet wird und/oder

e) wobei zumindest eine Teilmenge des aus der Reverse-Wassergas-Shift-Anlage anfallenden kohlenstoffmonoxidhaltigen Gases als CO-Nutzgas zum Betrieb der Chemieanlage und/oder Biotechnologieanlage verwendet wird.

Nach einer weiteren Ausführungsform des erfindungsgemäßen Verfahrens zum Betreiben eines Anlagenverbundes zur Herstellung mineralischer Baustoffe wird der Wasserstoffgehalt des $CO$-$H_2$-Nutzgasstromes und/oder $CO$-$H_2$-Nutzgasstromes und/oder $CO_2$-$CO$-$H_2$-Nutzgasstromes auf ein Verhältnis im Bereich von 5 Vol-% bis 95 Vol-% bezogen auf das Gesamtvolumen des zugehörigen Nutzgasstromes eingestellt.

Nach einer weiteren Ausführungsform des erfindungsgemäßen Verfahrens zum Betreiben eines Anlagenverbundes zur Herstellung mineralischer Baustoffe wird/werden das Mischnutzgas und/oder das $CO_2$-Nutzgas und/oder das $CO_2$-$H_2$-Nutzgas und/oder das $CO$-Nutzgas und/oder das $CO$-$H_2$-Nutzgas und/oder das $CO$-$CO_2$-$H_2$-Nutzgas aufbereitet, wobei das Aufbereiten eine Gasreinigung und/oder eine Gaskonditionierung umfasst.

Nach einer weiteren Ausführungsform des erfindungsgemäßen Verfahrens zum Betreiben eines Anlagenverbundes zur Herstellung mineralischer Baustoffe wird/werden das Mischnutzgas und/oder das $CO_2$-Nutzgas und/oder das $CO_2$-$H_2$-Nutzgas und/oder das $CO$-Nutzgas und/oder das $CO$-$H_2$-Nutzgas und/oder das $CO$-$CO_2$-$H_2$-Nutzgas aufbereitet, wobei das Aufbereiten eine Komprimierung umfasst.

Nach einer weiteren Ausführungsform des erfindungsgemäßen Verfahrens zum Betreiben eines Anlagenverbundes zur Herstellung mineralischer Baustoffe wird die Leistung der Chemieanlage und/oder der Biotechnologieanlage in Abhängigkeit der dieser/n Anlage(n) zugeführten Nutzgasmenge an Mischnutzgas und/oder $CO_2$-Nutzgas und/oder $CO_2$-$H_2$-Nutzgas und/oder $CO$-Nutzgas und/oder $CO$-$H_2$-Nutzgas und/oder das $CO$-$CO_2$-$H_2$-Nutzgas geregelt.

Nach einer weiteren Ausführungsform des erfindungsgemäßen Verfahrens zum Betreiben eines Anlagenverbundes zur Herstellung mineralischer Baustoffe umfassend einen Brennofen zur Erzeugung mineralischer Baustoffe, einen Kühler für die Kühlung mineralischer Baustoffe, und ein Gasleitungssystem für Gase, die bei der Herstellung der mineralischen Baustoffe anfallen, und eine an das Gasleitungssystem angeschlossene Chemieanlage und/oder Biotechnologieanlage aufweist und der Anlagenverbund eine Produktionsanlage mit einer Kohlenstoffdioxidquelle und ein $CO_2$-Gasleitungssystem für zumindest einen aus der Produktionsanlage mit einer Kohlenstoffdioxidquelle anfallenden Kohlenstoffdioxidhaltigen Gasmengenstrom umfasst, wobei zumindest eine Teilmenge des bei der Herstellung der mineralischen Baustoffe anfallenden Gases und/oder des aus der Produktionsanlage mit einer Kohlenstoffdioxidquelle anfallenden Kohlenstoffdioxidhaltigen anfallenden Gases als Nutzgas zum Betrieb der Chemieanlage und/oder Biotechnologieanlage verwendet wird.

Nach einer weiteren Ausführungsform des erfindungsgemäßen Verfahrens zum Betreiben eines Anlagenverbundes zur Herstellung mineralischer Baustoffe wird dem Anlagenverbund, insbesondere dem Brennofen zur Erzeugung mineralischer Baustoffe zusätzlich ein Sauerstoffstrom mit einer Sauerstoffzufuhreinrichtung zugeführt.

Nach einer weiteren Ausführungsform des erfindungsgemäßen Verfahrens zum Betreiben eines Anlagenverbundes zur Herstellung mineralischer Baustoffe der Anlagenverbund zusätzlich umfassend eine Anlage zur Wasserstofferzeugung und ein $H_2$-Gasleitungssystem für aus der Anlage zur Wasserstofferzeugung anfallende wasserstoffhaltige Gasmengenströme, wird zumindest eine Teilmenge des bei der Herstellung der mineralischen Baustoffe anfallenden Gases und/oder des aus der Produktionsanlage mit einer Kohlenstoffdioxidquelle anfallenden Kohlenstoffdioxidhaltigen anfallenden Gases mit zumindest einer Teilmenge anfallender wasserstoffhaltiger Gase aus der Anlage zur Wasserstofferzeugung gemischt und wird das Mischgas als Nutzgas zum Betrieb der Chemieanlage und/oder Biotechnologieanlage verwendet.

Nach einer weiteren Ausführungsform des erfindungsgemäßen Verfahrens zum Betreiben eines Anlagenverbundes zur Herstellung mineralischer Baustoffe wird zumindest ein Teil des Nutzgases nach einer Gaskonditionierung und/oder Gasreinigung als Synthesegas zur Herstellung chemischer Produkte verwendet wird und/oder der Biotechnologieanlage zugeführt wird und für biochemische Prozesse genutzt.

Nach einer weiteren Ausführungsform des erfindungsgemäßen Verfahrens zum Betreiben eines Anlagenverbundes zur Herstellung mineralischer Baustoffe wird das aus zumindest einer Teilmenge des bei der Herstellung der mineralischen Baustoffe anfallenden Gases und/oder des aus der Produktionsanlage mit einer Kohlenstoffdioxidquelle anfallenden Kohlenstoffdioxidhaltigen anfallenden Gases nach einer Gaskonditionierung und/oder Gasreinigung ein Synthesegas hergestellt.

Nach einer weiteren Ausführungsform des erfindungsgemäßen Verfahrens zum Betreiben eines Anlagenverbundes zur Herstellung mineralischer Baustoffe wird zumindest ein Teil des nach einer Gaskonditionierung und/oder Gasreinigung hergestellten Synthesegases zur Herstellung chemischer Produkte verwendet oder wird der Biotechnologieanlage zugeführt wird und wird für biochemische Prozesse genutzt.

Nach einer weiteren Ausführungsform des erfindungsgemäßen Verfahrens zum Betreiben eines Anlagenverbundes zur Herstellung mineralischer Baustoffe wird zumindest eine Teilmenge der in der Biotechnologieanlage anfallenden Biomasse als Sekundärbrennstoff mit der Sekundärbrennstoffzufuhreinrichtung dem Anlagenverbund, insbesondere dem Brennofen zur Erzeugung mineralischer Baustoffe zugeführt und/oder der Anlagenverbund weist zusätzlich einen Biomassespeicher zur Speicherung von Biomasse, insbesondere aus der Biotechnologieanlage auf, wobei zumindest eine Teilmenge der in dem Biomassespeicher gespeicherte Biomasse als Sekundärbrennstoff mit der Sekundärbrennstoffzufuhreinrichtung dem Anlagenverbund, insbesondere dem Brennofen zur Erzeugung mineralischer Baustoffe zugeführt wird.

Gemäß einer weiteren Ausführungsform des erfindungsgemäßen Verfahrens zum Betreiben eines Anlagenverbundes zur Herstellung mineralischer Baustoffe wird die Zuführung der zumindest einen Teilmenge der in der Biotechnologieanlage anfallenden und/oder der in dem Biomassespeicher gespeicherten Biomasse als Sekundärbrennstoff mit der Sekundärbrennstoffzufuhreinrichtung in den Anlagenverbund, insbesondere den Brennofen zur Erzeugung mineralischer Baustoffe in Abhängigkeit von dem Heizwert der Biomasse gesteuert. An allen erfindungsgemäßen Anlagen können Verdichter zum Komprimieren der Gase, Mischgase angeordnet sein.

Der Gegenstand der Erfindung umfasst auch alle Kombinationen der vorgenannten Ausführungsformen, insbesondere der Anlagen innerhalb des Anlagenverbundes.

Kurze Beschreibung der Zeichnung

Der erfindungsgemäße Anlagenverbund zur Herstellung mineralischer Baustoffe wird anhand der Zeichnung erläutert.

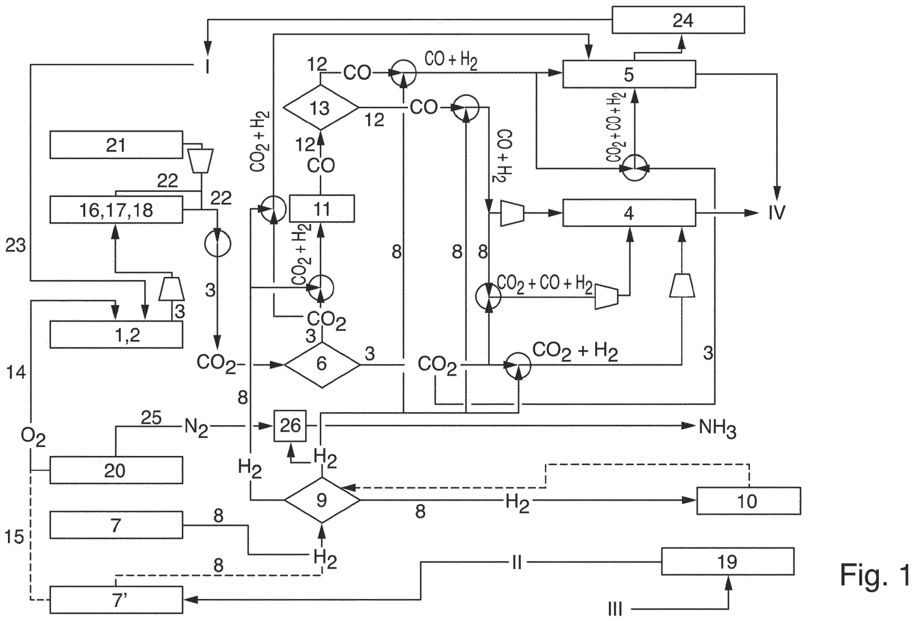

Fig. 1 zeigt ein schematisches, stark vereinfachtes Blockschaltbild eines Anlagenverbundes zur Herstellung mineralischer Baustoffe gemäß einer Ausführungsform der Erfindung.

In der Fig. 1 ist eine Übersicht eines Anlagenverbundes zur Herstellung mineralischer Baustoffe dargestellt. Der Anlagenverbund umfasst einen Brennofen 1 zur Erzeugung mineralischer Baustoffe, einen Kühler 2 zur Kühlung der mineralischen Baustoffe und ein Gasleitungssystem 3 für Gase, die bei der Herstellung der mineralischen Baustoffe anfallen. An das Gasleitungssystem 3 ist eine Chemieanlage 4 und eine Biotechnologieanlage 5 angeschlossen. Das Gasleitungssystem 3 umfasst eine steuerbare Gasweiche 6, welche die der Chemieanlage 4 und/oder Biotechnologieanlage 5 zugeführten Gasmengenströme aufteilt. Des Weiteren ist zusätzlich eine Sauerstoffzufuhreinrichtung 14 dargestellt über welche Luft mit einem erhöhten Sauerstoffgehalt und/oder Sauerstoff dem Brennofen 1 zugeführt werden kann. Zusätzlich weist der Anlagenverbund eine Anlage zur Wasserstofferzeugung 7, 7' und ein $H_2$-Gasleitungssystem 8 für aus der Anlage zur Wasserstofferzeugung 7, 7' anfallender wasserstoffhaltige Gasmengenströme auf. Mit dem $H_2$-Gasleitungssystem 8 ist das Gasleitungssystem 3 über eine Mischvorrichtung verbunden , insbesondere angeordnet in Strömungsrichtung nach der steuerbaren Gasweiche (6). Hierdurch können Mischgase, bestehend aus Gasen, die bei der Herstellung der mineralischen Baustoffe anfallen sowie anfallenden wasserstoffhaltigen Gasen aus der Anlage zur Wasserstofferzeugung 7, 7' gemischt und der Chemieanlage 4 und/oder Biotechnologieanlage 5 zugeführt werden. Zudem kann das $H_2$-Gasleitungssystem 8 eine steuerbare $H_2$-Gasweiche 9 umfassen, wobei mittels der steuerbaren $H_2$-Gasweiche 9 die der Chemieanlage 4 und/oder der Biotechnologieanlage 5 zugeführten wasserstoffhaltigen Gasmengenströme steuerbar sind. Ebenso kann das $H_2$ Gasleitungssystem 8 zum Speichern zumindest einer Teilmenge anfallender wasserstoffhaltige Gase aus der Anlage zur Wasserstoff Erzeugung 7, 7' einen $H_2$-Speicher 10 umfassen, wobei der $H_2$-Speicher 10 mit dem $H_2$-Gasleitungssystem 8 verbunden ist. Die Anlage zur Wasserstofferzeugung 7, 7' kann auch als eine Elektrolyseanlage zur Wasserelektrolyse 7' ausgebildet sein wobei die Elektrolyseanlage zur Wasserelektrolyse 7' mittels einer Sauerstoffrückführleitung 15 mit der Sauerstoffzufuhreinrichtung 14 verbunden ist. Zudem kann der Anlagenverbund eine Reverse Wassergas-Shift-Anlage 11 (RWGS-Anlage) und ein CO-Gasleitungssystem 12 für aus der Revers-Wassergas-Shift-Anlage 11 anfallende kohlenstoffmonooxidhaltige Gasmengenströme umfasst. Vorzugsweise ist die Revers-Wassergas-Shift-Anlage 11 in Strömungsrichtung nach der steuerbaren Gasweiche 6 mit dem Gasleitungssystem 3 und dem $H_2$-Gasleitungssystem 8 verbunden. Des Weiteren kann der Anlagenverbund eine Anlage zur $CO_2$-Abtrennung 16 von aus den bei der Herstellung der mineralischen Baustoffe anfallenden Gas aufweist. Der Anlagenverbund kann zusätzlich einer Anlage zur $CO_2$-Reinigung 17, 7' und/oder einer Anlage zur $CO_2$-Konditionierung 18 aufweisen, wobei die Anlage zur $CO_2$-Reinigung 17, 7' und/oder die Anlage zur $CO_2$-Konditionierung 18 mit der Anlage zur $CO_2$-Abtrennung 16 verbunden sind/ist. Das CO-Gasleitungssystem 12 kann eine steuerbare CO-Gasweiche 13 aufweisen, wobei mittels der steuerbaren CO-Gasweiche 13 die der Chemieanlage 4 und/oder der Biotechnologieanlage 5 zugeführten kohlenstoffmonooxidhaltigen Gasmengenströme steuerbar sind. Der Anlagenverbund kann zusätzlich einen Energiespeicher 19, insbesondere einen elektrochemischen Speicher zur Deckung zumindest eines Teils des Strombedarfs des Anlagenverbundes aufweisen. Zudem kann der Anlagenverbund einer Luftzerlegungsanlage 20 zur wenigstens teilweisen Zerlegung von Umgebungsluft in ein wenigstens teilweise Sauerstoff haltiges Gas und ein wenigstens teilweise Stickstoff haltiges Gas mit einer sauerstoffhaltigen gasführenden Leitung und einer stickstoffhaltigen Gas führenden Leitung 25 aufweisen, wobei die Sauerstoff haltiges gasführende Leitung mit der Sauerstoffzufuhreinrichtung 14 verbunden ist. Zudem kann der Anlagenverbund eine Anlage zur Ammoniakherstellung 26 umfassen, welche mit mittels der stickstoffhaltigen Gas führenden Leitung 25 mit dem Anlagenverbund verbunden ist.

Eine Zuführung von wasserstoffhaltigem Gas erfolgt über das $H_2$-Gasleitungssystem 8 zu der Anlage zur Ammoniakherstellung 26. Des Weiteren kann der Anlagenverbund eine Produktionsanlage mit einer Kohlendioxydquelle 21 und ein $CO_2$-Gasleitungssystem 22 für zumindest einen aus der Produktionsanlage mit einer Kohlenstoffdioxidquelle 21 anfallenden Kohlenstoffdioxidhaltigen Gasmengen Strom umfassen, wobei das $CO_2$-Gasleitungssystem 22 mit dem Gasleitungssystem 3 verbunden ist. Der Anlagenverbund kann zusätzlich einer Sekundärbrennstoffzufuhreinrichtung 23 zur Zuführung von Biomasse zum wenigstens teilweisen Betrieb des Anlagenverbundes, insbesondere des Brennofens 1 zur Erzeugung mineralischer Baustoffe mit Sekundärbrennstoffen aufweisen. Des Weiteren kann der Anlagenverbund einen Biomassespeicher 24 zur Speicherung von Biomasse, insbesondere aus der Biotechnologieanlage 5 aufweisen, wobei zumindest eine Teilmenge der Biomasse aus dem Bio Massenspeicher 24 und/oder der Biotechnologieanlage 5 als Sekundärbrennstoff über die Sekundärbrennstoffzuführeinrichtung 25 dem Brennofen 1 zur Erzeugung mineralischer Baustoffe zugeführt werden kann. Die beispielhaft dargestellten gleichschenklich trapezförmigen Elemente sind Verdichter zum Komprimieren von Gas(en).

Gewerbliche Anwendbarkeit

Anlagen aus dem vorbeschriebenen Anlagenverbund werden zur Herstellung mineralischer Baustoffe eingesetzt.

**Bezugszeichenliste**

| | | |
|---|---|---|
| 1 | = | Brennofen |
| 2 | = | Kühler |
| 3 | = | Gasleitungssystem |
| 4 | = | Chemieanlage |
| 5 | = | Biotechnologieanlage |
| 6 | = | Gasweiche |
| 7, 7' | = | Anlage zur Wasserstofferzeugung |
| 7' | = | Elektrolyseanlage zur Wasserelektrolyse |
| 8 | = | $H_2$-Gasleitungssystem |
| 9 | = | $H_2$-Gasweiche |
| 10 | = | $H_2$-Speicher |

| | | |
|---|---|---|
| 11 | = | Reverse-Wassergas-Shift-Anlage (RWGS) |
| 12 | = | CO-Gasleitungssystem |
| 13 | = | CO-Gasweiche |
| 14 | = | Sauerstoffzufuhreinrichtung |
| 15 | = | Sauerstoffrückführleitung |
| 16 | = | Anlage zur $CO_2$-Abtrennung |
| 17 | = | Anlage zur $CO_2$-Reinigung |
| 18 | = | Anlage zur $CO_2$-Konditionierung |
| 19 | = | Energiespeicher |
| 20 | = | Luftzerlegungsanlage |
| 21 | = | Produktionsanlage mit einer Kohlenstoffdioxidquelle |
| 22 | = | $CO_2$-Gasleitungssystem |
| 25 | = | Sekundärbrennstoffzufuhreinrichtung |
| 24 | = | Biomassespeicher |
| 25 | = | stickstoffhaltiges Gas führende Leitung |
| 26 | = | Anlage zur Ammoniakherstellung |
| I | = | Sekundärbrennstoff |
| II | = | Strom |
| III | = | Erneuerbare Energie |
| IV | = | Produkt(e) |

**Patentansprüche**

1.   Anlagenverbund zur Herstellung mineralischer Baustoffe mit

einem Brennofen (1) zur Erzeugung mineralischer Baustoffe,
einem Kühler (2) zur Kühlung der mineralischen Baustoffe, und
einem Gasleitungssystem (3) für Gase, die bei der Herstellung der mineralischen Baustoffe anfallen,
**dadurch gekennzeichnet, dass**
der Anlagenverbund eine an das Gasleitungssystem (3) angeschlossene Chemieanlage (4), in der chemische Produkte aus den zugeführten Gasmengenströmen erzeugt werden, wobei die Gasmengenströme Komponenten des Endproduktes enthalten, und/oder Biotechnologieanlage (5), in der die Gase fermentiert werden, aufweist und das Gasleitungssystem (3) mindestens eine steuerbare Gasweiche (6) zur Aufteilung der der Chemieanlage (4) und/oder Biotechnologieanlage (5) zugeführten Gasmengenströme und eine Anlage zur Wasserstofferzeugung (7) und ein $H_2$-Gasleitungssystem (8) für aus der Anlage zur Wasserstofferzeugung (7) emittierte wasserstoffhaltige Gasmengenströme, wobei das Gasleitungssystem (3) in Strömungsrichtung vor und/oder nach der steuerbaren Gasweiche (6) verbunden ist mit dem $H_2$-Gasleitungssystem (8) über eine Mischvorrichtung zur Herstellung eines Mischgases umfassend anfallende Gase, aus der Herstellung der mineralischen Baustoffe und aus der Anlage zur Wasserstofferzeugung (7), aufweist.

2. Anlagenverbund nach Anspruch 1, **dadurch gekennzeichnet, dass** der Anlagenverbund zusätzlich eine Sauerstoffzufuhreinrichtung (14) aufweist, welche mit dem Brennofen (1) zur Erzeugung mineralischer Baustoffe verbunden ist.

3. Anlagenverbund nach einem der Ansprüche 1 bis 2, **dadurch gekennzeichnet, dass** der Anlagenverbund zusätzlich eine Anlage zur $CO_2$-Abtrennung (16) von aus den bei der Herstellung der mineralischen Baustoffe anfallenden Gas aufweist.

4. Anlagenverbund nach Anspruch 3, **dadurch gekennzeichnet, dass** der Anlagenverbund zusätzlich eine Anlage zur $CO_2$-Reinigung (17) und/oder Anlage zur $CO_2$-Konditionierung (18) aufweist, wobei die Anlage zur $CO_2$-Reinigung (17) und/oder Anlage zur $CO_2$-Konditionierung (18) mit der Anlage zur $CO_2$-Abtrennung (16) verbunden ist.

5. Anlagenverbund nach einem der Ansprüche 1 bis 4, **dadurch gekennzeichnet, dass** der Anlagenverbund zusätzlich einen $H_2$-Speicher (10) zum Speichern zumindest einer Teilmenge anfallender wasserstoffhaltiger Gase aus der Anlage zur Wasserstofferzeugung (7) aufweist, wobei der $H_2$-Speicher (10) mit dem $H_2$-Gasleitungssystem (8) verbunden ist.

6. Anlagenverbund nach einem der Ansprüche 1 bis 5, **dadurch gekennzeichnet, dass** die Anlage zur Wasserstofferzeugung (7) eine Elektrolyseanlage zur Wasserelektrolyse aufweist.

7. Anlagenverbund nach Anspruch 6, **dadurch gekennzeichnet, dass** die Elektrolyseanlage zur Wasserelektrolyse mittels einer Sauerstoffrückführleitung (15) mit der Sauerstoffzufuhreinrichtung (14) verbunden ist.

8. Anlagenverbund nach einem der Ansprüche 1 bis 7, **dadurch gekennzeichnet, dass** der Anlagenverbund zusätzlich einen Energiespeicher (19), insbesondere einen elektrochemischen Speicher zur Deckung zumindest eines Teils des Strombedarfs des Anlagenverbundes aufweist.

9. Anlagenverbund nach einem der Ansprüche 1 bis 8, **dadurch gekennzeichnet, dass** der Anlagenverbund zusätzlich eine Luftzerlegungsanlage (20) zur wenigstens teilweisen Zerlegung von Umgebungsluft in ein wenigstens teilweise sauerstoffhaltiges Gas und ein wenigstens teilweise stickstoffhaltiges Gas mit einer sauerstoffhaltigen Gas führenden Leitung und einer stickstoffhaltigen Gas führenden Leitung aufweist.

10. Anlagenverbund nach Anspruch 9, **dadurch gekennzeichnet, dass** die sauerstoffhaltiges Gas führende Leitung mittels einer Sauerstoffrückführleitung (15) mit der Sauerstoffzufuhreinrichtung (14) verbunden ist.

11. Anlagenverbund nach Anspruch 9, **dadurch gekennzeichnet, dass** die stickstoffhaltiges Gas führende Leitung mittels einer Mischvorrichtung mit dem $H_2$-Gasleitungssystem (8) verbunden ist, insbesondere zur Herstellung von Ammoniak.

12. Verfahren zum Betreiben eines Anlagenverbundes zur Herstellung mineralischer Baustoffe, der einen Brennofen (1) zur Erzeugung der mineralischen Baustoffe, einen Kühler (2) zur Kühlung der mineralischen Baustoffe, ein Gasleitungssystem (3) für Gase, die bei der Herstellung der mineralischen Baustoffe anfallen, eine an das Gasleitungssystem (3) angeschlossene Chemieanlage (4), in der chemische Produkte aus den zugeführten Gasmengenströmen erzeugt werden, wobei die Gasmengenströme Komponenten des Endproduktes enthalten, und/oder Biotechnologieanlage (5), in der die Gase fermentiert werden, mindestens eine mit dem Gasleitungssystem (3) verbundene steuerbare Gasweiche (6) zur Aufteilung der der Chemieanlage (4) und/oder Biotechnologieanlage (5) zugeführten Gasmengenströme und eine Anlage zur Wasserstofferzeugung (7) und ein $H_2$-Gasleitungssystem (8) für wasserstoffhaltige Gasmengenströme aufweist, wobei

a) zumindest eine Teilmenge des bei der Herstellung der mineralischen Baustoffe anfallenden Gases mit
b) zumindest einer Teilmenge des aus der Anlage zur Wasserstofferzeugung (7) anfallenden wasserstoffhaltigen Gases

c) gemischt wird und

d) wobei das Mischgas als Nutzgas zum Betrieb der Chemieanlage (4) und/oder Biotechnologieanlage (5) verwendet wird.

13. Verfahren nach Anspruch 12, **dadurch gekennzeichnet, dass** die Anlage zur Wasserstofferzeugung (7) eine Elektrolyseanlage zur Wasserelektrolyse aufweist.

14. Verfahren nach Anspruch 12 oder 13, **dadurch gekennzeichnet, dass** zumindest eine Teilmenge des aus der Anlage zur Wasserstofferzeugung (7), vorzugsweise Elektrolyseanlage zur Wasserelektrolyse, anfallenden sauerstoffhaltigen Gases in dem Anlagenverbund zur Herstellung der mineralischen Baustoffe genutzt wird, insbesondere in den Brennofen (1) zur Erzeugung mineralischer Baustoffe rückgeführt wird.

15. Verfahren nach einem der Ansprüche 12 bis 14, **dadurch gekennzeichnet, dass** der Anlagenverbund zusätzlich eine Luftzerlegungsanlage (20) zur wenigstens teilweisen Zerlegung von Umgebungsluft in ein wenigstens teilweise sauerstoffhaltiges Gas und ein wenigstens teilweise stickstoffhaltiges Gas mit einer sauerstoffhaltigen Gas führenden Leitung (14) und einer stickstoffhaltigen Gas führenden Leitung (15) aufweist, wobei zumindest eine Teilmenge des aus der Luftzerlegungsanlage (20) wenigstens teilweise sauerstoffhaltigen Gases in dem Anlagenverbund zur Herstellung der mineralischen Baustoffe genutzt wird, insbesondere in den Brennofen (1) zur Erzeugung mineralischer Baustoffe rückgeführt wird und/oder zumindest eine Teilmenge des aus der Luftzerlegungsanlage (20) wenigstens teilweise stickstoffhaltigen Gases mit zumindest einer Teilmenge des aus der Anlage zur Wasserstofferzeugung (7), vorzugsweise Elektrolyseanlage zur Wasserelektrolyse, emittierten wasserstoffhaltigen Gases gemischt wird, insbesondere zur Herstellung von Ammoniak.

**Claims**

1. Plant network for the production of mineral building materials with

   a kiln (1) for the production of mineral building materials,
   a cooler (2) for cooling the mineral building materials, and
   a gas pipe system (3) for gases produced during the manufacture of mineral building materials, **characterised in that**
   the plant network has a chemical plant (4) connected to the gas pipework system (3), in which chemical products are produced from the supplied gas volume flows, the gas volume flows containing components of the end product, and/or a biotechnology plant (5), in which the gases are fermented, and the gas pipework system (3) has at least one controllable gas diverter (6) for dividing the gas flows supplied to the chemical plant (4) and/or biotechnology plant (5) and a hydrogen production plant (7) and an $H_2$ gas pipework system (8) for hydrogen-containing gas flows emitted from the hydrogen production plant (7), wherein the gas line system (3) is connected in the flow direction upstream and/or downstream of the controllable gas diverter (6) to the $H_2$ gas line system (8) via a mixing device for producing a mixed gas comprising gases arising from the production of the mineral building materials and from the plant for hydrogen production (7).

2. Plant network according to claim 1, **characterised in that** the plant network additionally has an oxygen supply device (14) which is connected to the kiln (1) for producing mineral building materials.

3. Plant network according to one of claims 1 to 2, **characterised in that** the plant network additionally comprises a plant for $CO_2$ separation (16) of gas resulting from the production of the mineral building materials.

4. Plant network according to claim 3, **characterised in that** the plant network additionally comprises a plant for $CO_2$ purification (17) and/or plant for $CO_2$ conditioning (18), wherein the plant for $CO_2$ purification (17) and/or plant for $CO_2$ conditioning (18) is connected to the plant for $CO_2$ separation (16).

5. Plant network according to one of claims 1 to 4, **characterised in that** the plant system additionally has an $H_2$ storage unit (10) for storing at least a partial quantity of hydrogen-containing gases arising from the hydrogen production plant (7), the $H_2$ storage unit (10) being connected to the $H_2$ gas pipeline system (8).

6. Plant network according to one of claims 1 to 5, **characterised in that** the plant for hydrogen production (7) comprises an electrolysis plant for water electrolysis.

7. Plant network according to claim 6, **characterised in that** the electrolysis system for water electrolysis is connected to the oxygen supply device (14) by means of an oxygen return line (15).

8. Plant network according to one of claims 1 to 7, **characterised in that** the system network additionally has an energy storage device (19), in particular an electrochemical storage device for covering at least part of the power requirement of the system network.

9. Plant network according to one of claims 1 to 8, **characterised in that** the plant network additionally comprises an air separation plant (20) for at least partial separation of ambient air into an at least partially oxygen-containing gas and an at least partially nitrogen-containing gas with an oxygen-containing gas-conducting line and a nitrogen-containing gas-conducting line.

10. Plant network according to claim 9, **characterised in that** the line carrying oxygen-containing gas is connected to the oxygen supply device (14) by means of an oxygen return line (15).

11. Plant network according to claim 9, **characterised in that** the line carrying nitrogen-containing gas is connected to the $H_2$ gas line system (8) by means of a mixing device, in particular for the production of ammonia.

12. Process for operating a plant network for the production of mineral building materials, which comprises a kiln (1) for producing the mineral building materials, a cooler (2) for cooling the mineral building materials, a gas pipe system (3) for gases which are produced during the production of the mineral building materials, a chemical plant (4) connected to the gas pipe system (3), in which chemical products are produced from the supplied gas quantity streams, wherein the gas flows contain components of the end product, and/or biotechnology plant (5), in which the gases are fermented, has at least one controllable gas switch (6) connected to the gas pipe system (3) for splitting the gas flows supplied to the chemical plant (4) and/or biotechnology plant (5) and a plant for hydrogen production (7) and an $H_2$ gas pipe system (8) for hydrogen-containing gas flows, wherein

    a) at least a portion of the gas produced during the manufacture of mineral building materials with
    b) at least part of the hydrogen-containing gas produced by the hydrogen production plant (7)
    c) is mixed and
    d) wherein the mixed gas is used as a useful gas for operating the chemical plant (4) and/or biotechnology plant (5).

13. Process according to claim 12, **characterised in that** the hydrogen production plant (7) comprises an electrolysis plant for water electrolysis.

14. Process according to claim 12 or 13, **characterised in that** at least a partial quantity of the oxygen-containing gas produced from the plant for hydrogen production (7), preferably an electrolysis plant for water electrolysis, is used in the plant network for the production of the mineral building materials, in particular is fed back into the kiln (1) for the production of mineral building materials.

15. Process according to one of claims 12 to 14, **characterised in that** the plant network additionally comprises an air separation plant (20) for at least partial separation of ambient air into an at least partially oxygen-containing gas and an at least partially nitrogen-containing gas with an oxygen-containing gas-conducting line (14) and a nitrogen-containing gas-conducting line (15), wherein at least a partial quantity of the at least partially oxygen-containing gas from the air separation plant (20) is used in the plant network for the production of the mineral building materials, in particular is fed back into the kiln (1) for the production of mineral building materials and/or at least a partial quantity of the gas containing at least some nitrogen from the air separation plant (20) is mixed with at least a partial quantity of the hydrogen-containing gas emitted from the plant for hydrogen production (7), preferably an electrolysis plant for water electrolysis, in particular for the production of ammonia.

**Revendications**

1. Réseau d'usines pour la production de matériaux de construction minéraux avec

    un four (1) pour la production de matériaux de construction minéraux,
    un refroidisseur (2) pour refroidir les matériaux de construction minéraux, et
    un système de conduites de gaz (3) pour les gaz produits lors de la fabrication de matériaux de construction minéraux,
    **se caractérise par le fait que**
    le réseau d'usines comporte une usine chimique (4) connectée au système de canalisations de gaz (3), dans laquelle des produits chimiques sont fabriqués à partir des flux de volume de gaz fournis, les flux de volume de gaz contenant des composants du produit final, et/ou une usine de biotechnologie (5), dans laquelle les gaz sont fermentés, et le système de canalisations de gaz (3) comporte au moins un déviateur de gaz contrôlable (6) pour diviser les flux de gaz fournis à l'usine chimique (4) et/ou à l'usine de biotechnologie (5) et à une usine de production d'hydrogène (7), ainsi qu'un système de canalisations de gaz $H_2$ (8) pour les flux de gaz contenant de l'hydrogène émis par l'usine de production d'hydrogène (7), dans lequel le système de conduites de gaz (3) est relié dans le sens de l'écoulement en amont et/ou en aval du déviateur de gaz contrôlable (6) au système de conduites de gaz $H_2$ (8) par l'intermédiaire d'un dispositif de mélange pour produire un gaz mélangé comprenant des gaz provenant de la production des matériaux de construction minéraux et de l'installation de production d'hydrogène (7).

2. Réseau d'installations selon la revendication 1, **caractérisé par le fait que** le réseau d'installations comporte en outre un dispositif d'alimentation en oxygène (14) qui est relié au four (1) pour la production de matériaux de construction minéraux.

3. Réseau d'usines selon l'une des revendications 1 à 2, **caractérisé par le fait que** le réseau d'usines comprend en outre une installation de séparation du $CO_2$ (16) du gaz résultant de la production des matériaux de construction minéraux.

4. Réseau d'installations selon la revendication 3, **caractérisé par le fait que** le réseau d'installations comprend en outre une installation de purification du $CO_2$ (17) et/ou une installation de conditionnement du $CO_2$ (18), l'installation de purification du $CO_2$ (17) et/ou l'installation de conditionnement du $CO_2$ (18) étant connectée à l'installation de séparation du $CO_2$ (16).

5. Réseau d'installations selon l'une des revendications 1 à 4, **caractérisé par le fait que** le système d'installations comporte en outre une unité de stockage $H_2$ (10) pour stocker au moins une quantité partielle de gaz contenant de l'hydrogène provenant de l'installation de production d'hydrogène (7), l'unité de stockage $H_2$ (10) étant reliée au système de gazoducs $H_2$ (8).

6. Réseau d'installations selon l'une des revendications 1 à 5, **caractérisé par le fait que** l'installation de production d'hydrogène (7) comprend une installation d'électrolyse de l'eau.

7. Réseau d'installations selon la revendication 6, **caractérisé par le fait que** le système d'électrolyse de l'eau est relié au dispositif d'alimentation en oxygène (14) au moyen d'une conduite de retour d'oxygène (15).

8. Réseau d'installations selon l'une des revendications 1 à 7, **caractérisé par le fait que** le réseau de systèmes comporte en outre un dispositif de stockage d'énergie (19), en particulier un dispositif de stockage électrochimique destiné à couvrir au moins une partie des besoins en énergie du réseau de systèmes.

9. Réseau d'installations selon l'une des revendications 1 à 8, **caractérisé par le fait que** le réseau d'installations comprend en outre une installation de séparation d'air (20) pour la séparation au moins partielle de l'air ambiant en un gaz contenant au moins partiellement de l'oxygène et un gaz contenant au moins partiellement de l'azote, avec une conduite de gaz contenant de l'oxygène et une conduite de gaz contenant de l'azote.

10. Réseau d'installations selon la revendication 9, **caractérisé par le fait que** la conduite transportant le gaz contenant de l'oxygène est reliée au dispositif d'alimentation en oxygène (14) au moyen d'une conduite de retour d'oxygène (15).

11. Réseau d'installations selon la revendication 9, **caractérisé par le fait que** la conduite transportant le gaz contenant de l'azote est reliée au système de conduite de gaz $H_2$ (8) au moyen d'un dispositif de mélange, en particulier pour la production d'ammoniac.

12. Procédé d'exploitation d'un réseau d'installations pour la production de matériaux de construction minéraux, qui comprend un four (1) pour la production de matériaux de construction minéraux, un refroidisseur (2) pour le refroidissement des matériaux de construction minéraux, un système de conduites de gaz (3) pour les gaz produits pendant la production des matériaux de construction minéraux, une usine chimique (4) connectée au système de conduites de gaz (3), dans laquelle des produits chimiques sont produits à partir des flux de quantité de gaz fournis, dans laquelle les flux de gaz contiennent des composants du produit final, et/ou une usine de biotechnologie (5), dans laquelle les gaz sont fermentés, possède au moins un commutateur de gaz contrôlable (6) connecté au système de conduites de gaz (3) pour diviser les flux de gaz fournis à l'usine chimique (4) et/ou à l'usine de biotechnologie (5), ainsi qu'une usine de production d'hydrogène (7) et un système de conduites de gaz $H_2$ (8) pour les flux de gaz contenant de l'hydrogène, dans lequel

    a) au moins une partie du gaz produit lors de la fabrication de matériaux de construction minéraux à l'aide de
    b) au moins une partie du gaz contenant de l'hydrogène produit par l'installation de production d'hydrogène (7)
    c) est mélangé et
    d) le gaz mélangé est utilisé comme gaz utile pour le fonctionnement de l'usine chimique (4) et/ou de l'usine de biotechnologie (5).

13. Procédé selon la revendication 12, **caractérisé par le fait que** l'installation de production d'hydrogène (7) comprend une installation d'électrolyse de l'eau.

14. Procédé selon la revendication 12 ou 13, **caractérisé par le fait qu'au** moins une quantité partielle du gaz contenant de l'oxygène produit par l'installation de production d'hydrogène (7), de préférence une installation d'électrolyse de l'eau, est utilisée dans le réseau d'installations pour la production de matériaux de construction minéraux, en particulier est réintroduite dans le four (1) pour la production de matériaux de construction minéraux.

15. Procédé selon l'une des revendications 12 à 14, **caractérisé par le fait que** le réseau d'installations comprend en outre une installation de séparation d'air (20) pour la séparation au moins partielle de l'air ambiant en un gaz contenant au moins partiellement de l'oxygène et un gaz contenant au moins partiellement de l'azote avec une conduite de gaz contenant de l'oxygène (14) et une conduite de gaz contenant de l'azote (15), dans lequel au moins une quantité partielle du gaz contenant au moins partiellement de l'oxygène provenant de l'installation de séparation d'air (20) est utilisée dans le réseau d'installations pour la production de matériaux de construction minéraux, en particulier est réintroduite dans le four (1) pour la production de matériaux de construction minéraux et/ou au moins une quantité partielle du gaz contenant au moins une partie de l'azote provenant de l'installation de séparation de l'air (20) est mélangée à au moins une quantité partielle du gaz contenant de l'hydrogène émis par l'installation de production d'hydrogène (7), de préférence une installation d'électrolyse de l'eau, en particulier pour la production d'ammoniaque.

Fig. 1

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014009487 A1
- WO 2015086152 A1
- WO 2015086153 A1

**In der Beschreibung aufgeführte Nicht-Patentliteratur**

- Chemical recycling of carbon dioxide emissions from a cement plant into dimethyl ether, a case study of an integrated process in France using a Reverse Water Gas Shift (RWGS) step. **V. PHUANGPHET.** International Journal of Hydrogen Energy. Elsevier Science Publishers, 11. April 2011, vol. 38, 6397-6405